# EUROPÄISCHE PATENTSCHRIFT

(11) **EP 1 615 739 B1**
(45) Veröffentlichungstag und Bekanntmachung des Hinweises auf die Patenterteilung: **20.12.2006**
(21) Anmeldenummer: 04724280.5
(22) Anmeldetag: 30.03.2004
(51) Int. Cl.: B23B 33/00

(54) **VORRICHTUNG ZUM EINSPANNEN EINES WERKSTÜCKS AUF EINER DREHANTREIBBAREN LÄNGSACHSE**
DEVICE FOR CLAMPING A WORKPIECE ALONG A ROTATABLY DRIVEN LONGITUDINAL AXIS
DISPOSITIF DE SERRAGE D'UNE PIECE SUR UN AXE LONGITUDINAL ENTRAINE EN ROTATION

(30) Priorität: 15.04.2003 DE 10317326
(43) Veröffentlichungstag der Anmeldung: 18.01.2006
(73) Patentinhaber: VOLLMER WERKE MASCHINENFABRIK GMBH, D-88400 Biberach (DE)
(72) Erfinder: BAILER, Peter, 88433 Schemmerhofen (DE); VEIL, Siegfried, 88416 Ochsenhausen (DE)
(74) Vertreter: Thum, Bernhard
(86) Internationale Anmeldenummer: PCT/EP2004/003363
(87) Internationale Veröffentlichungsnummer: WO 2004/091836

(56) Entgegenhaltungen:
- DE-A- 3 409 638
- FR-A- 2 169 527
- US-A- 2 380 381
- US-A- 3 108 412
- US-A- 4 398 579
- US-A- 5 135 810

## Beschreibung

Die vorliegende Erfindung betrifft eine Vorrichtung zum Einspannen eines Werkstücks auf einer drehantreibbaren Längsachse.

Es ist üblich, Werkstücke um ihre Längsachse drehbar zwischen zwei Spitzen einzuspannen und sie dann auf dieser Längsachse zu bearbeiten. Dies geschieht beispielsweise beim Bearbeiten von Wellen durch Drehen.

In der Regel sind beide Spitzen als Spanndorne ausgeführt, von denen einer drehangetrieben und mit einem Mitnehmer ausgestattet ist, der an dem eingespannten, zu bearbeitenden Werkstück zur Drehmomentübertragung angreift. Als Mitnehmer sind beispielsweise Bolzen oder Profile vorgesehen, die in korrespondierende Aufnahmen oder Komplementärprofile drehmomentübertragend eingreifen. Hierzu muss einerseits das zu bearbeitende Werkstück entsprechend ausgebildet sein und andererseits in eine vorbestimmte Axialposition bezüglich des den Mitnehmer aufweisenden Spanndorns gebracht werden, so dass eine Drehmomentübertragung auch tatsächlich garantiert ist. Dies führt zu Einschränkungen bei der Verwendung derartiger Einspannvorrichtungen.

In der US-B-2,380,381 ist eine Vorrichtung entsprechend dem Oberbegriff von Anspruch 1 beschrieben, bei der am Spanndorn eine Auskragung fixiert ist, an deren freiem Ende mit Hilfe einer Bügelbefestigung eine Blattfeder befestigt ist, die in eine an dem Werkstück vorgesehene Öffnung eingreift, um so das Drehmoment von dem Spanndorn auf das Werkstück zu übertragen.

Des Weiteren offenbart die US-A-3,108,412 ein Spannfutter einer Schleifmaschine zur Aufnahme eines Werkstückes, welches einenends ein Zahnrad und andemends einen Zahnradschaft aufweist. In dem Spannfutter sind in radialer Richtung hervorstehende Stifte mit an derem Ende angebrachten Kugeln vorgesehen, die mit den Zähnen des Zahnrades in Eingriff treten. Das Spannfutter selbst ist als Schnellspannfutter beschrieben.

Aus der DE 34 09 638 ist eine Vorrichtung zum automatischen Aufsetzen und entfernen eines Mitnehmers auf ein längliches Werkstück bekannt. Es wird ein Mitnehmermagazin beschrieben, welches unterschiedlich große Mitnehmer für unterschiedlich große Werkstücke aufweist. Ferner ist ein Mitnehmerstück beschrieben, welches an dem Werkstück angebracht und über einen Drehantrieb mit dem Spanndorn zusammenwirkt.

Es ist demgegenüber eine Aufgabe der vorliegenden Erfindung, eine Vorrichtung der eingangs bezeichneten Art bereitzustellen, welche ein einfaches und variables Einspannen von Werkstücken zwischen einem Spanndorn und einem Gegenhalter ermöglicht.

Diese Aufgabe wird durch eine Vorrichtung zum Einspannen eines Werkstücks auf einer drehantreibbaren Längsachse mit den Merkmalen des Anspruches 1 gelöst. Zur Lösung der oben genannten Aufgabe sieht die Erfindung vor, dass ein Adapterelement vorgesehen ist, weiches zur Fixierung an dem Werkstück ausgebildet ist, und welches mit dem Spanndorn zum Einspannen des Werkstückszusammenwirkt, wobei das Federelement unter Vorspannung an dem Adapterelement zur Drehmomentübertragung angreift oder in Eingriff mit diesem bringbar ist.

Die erfindungsgemäße Vorrichtung ist demnach hinsichtlich der Drehmomentübertragung von dem Spanndorn auf das Werkstück verhältnismäßig einfach aufgebaut. Das unter Vorspannung an dem Adapterelement angreifende Federelement dient dieser Drehmomentübertragung. Dadurch ist es möglich, den Mitnehmer stets in spielfreier Anlage an dem Adapterelement zu halten und dadurch eine permanente Drehmomentübertragung von dem Spanndorn über den Mitnehmer und das Adapterelement auf das Werkstück zu erreichen. Erfindungsgemäß ist es aufgrund der Anlage des Mitnehmers an dem Adapterelement unter Vorspannung ferner möglich, das Werkstück in verschiedenen Axialpositionen bezüglich des Spanndorns zu positionieren. Darauf soll später im Detail eingegangen werden. Es ist an dieser Stelle lediglich vorgreifend anzumerken, dass dadurch eine größere Vielfalt an Einsatzmöglichkeiten für die erfindungsgemäße Vorrichtung gegenüber dem Stand der Technik gegeben ist.

In einer Weiterbildung der Erfindung ist vorgesehen, dass das Federelement eine Blattfeder umfasst, die einenends an dem Spanndorn fixiert ist und an ihrem freien Ende mit einem Eingriffselement ausgebildet ist, wobei das Eingriffselement auslenkbar und mit dem Adapterelement in verdrehsicheren Eingriff bringbar ist. Die Verwendung einer Blattfeder ermöglicht eine einfache Realisierung des Mitnehmers bei gleichzeitig guter Funktionalität. Hinsichtlich der Blattfeder kann vorgesehen sein, dass diese in einer radialen oder axialen Ausnehmung des Spanndorns formschlüssig aufgenommen und fixiert ist. Dadurch kann eine Verdrehsicherung der Blattfeder erzielt werden, was insbesondere aufgrund ihrer Funktion als drehmomentübertragendes Element von Bedeutung ist.

Um eine hinreichend hohe Federsteifigkeit und bezüglich der Drehmomentübertragung auch eine hinreichend hohe Torsionssteifigkeit zu erreichen, ist in einer Weiterbildung der Erfindung vorgesehen, dass die Blattfeder eine Breite aufweist, die ein Mehrfaches ihrer Höhe beträgt. Hinsichtlich der konstruktiven Ausgestaltung der Blattfeder kann ferner vorgesehen sein, dass sich die Blattfeder in axialer Richtung verjüngt.

Im Hinblick auf das Eingriffselement, welches an dem freien Ende der Blattfeder vorgesehen ist, ist in einer Weiterbildung der Erfindung vorgesehen, dass sich dieses in radialer Richtung verjüngt. So kann das Eingriffselement beispielsweise konisch ausgebildet sein. Dadurch ist gewährleistet, dass das Eingriffselement aufgrund der durch das Federelement verursachten Vorspannung stets in Anlage mit einer korrespondierenden Öffnung an dem Adapterelement gehalten wird. Ein Ausführungsbeispiel der vorliegenden Erfindung sieht vor, dass das Eingriffselement in Form eines mehrstufigen Kegels ausgebildet ist, wobei die Kegelwinkel mit zunehmendem Abstand von dem freien Ende der Blattfeder zunehmen.

Alternativ zu einem mit Blattfeder ausgebildeten Federelement sieht eine Weiterbildung der Erfindung vor, dass das Federelement eine Druckfeder umfasst, welche an ihrem freien Ende mit einem Eingriffskörper ausgebildet ist. Der Eingriffskörper kann in diesem Fall beispielsweise eine an einem Ende der Druckfeder aufsitzende Kugel sein. In diesem Zusammenhang kann ferner vorgesehen sein, dass die Druckfeder und der Eingriffskörper zumindest teilweise in einer Aufnahmebohrung des Spanndorns oder des Gegenhalters aufgenommen und in dieser unter Komprimierung der Druckfeder verlagerbar sind.

Grundsätzlich ist es möglich, die Drehmomentübertragung zwischen Spanndorn und Werkstück durch verschiedene Eingriffssituationen des Mitnehmers an dem Adapterelement zu realisieren. So sieht eine erfindungsgemäße Alternative vor, dass das Federelement in axialer Richtung auslenkbar ist. Eine weitere Alternative sieht vor, dass das Federelement in radialer Richtung auslenkbar ist. Beide Alternativen gewährleisten bei hinreichend hoher Federsteifigkeit und Torsionssteifigkeit des Federelements eine zuverlässige Drehmomentübertragung von dem Spanndorn auf das Werkstück.

Um eine zuverlässige Zentrierung des Werkstücks auf der Längsachse gewährleisten zu können, sieht eine Weiterbildung der Erfindung vor, dass der Spanndorn oder/und der Gegenhalter je einen Zentrierkegel aufweisen. Alternativ ist es auch möglich, dass wenigstens eine Komponente von Spanndorn und Gegenhalter mit einer von einem Zentrierkegel abweichenden Geometrie ausgebildet ist, beispielsweise mit einem Umfangsgreifer oder dergleichen. Bei Verwendung eines Zentrierkegels kann erfindungsgemäß vorgesehen sein, dass dieser einen Zentrierkegelwinkel im Bereich zwischen 45° und 75°, bevorzugt zwischen 55° und 65°, besonders bevorzugt bei 60° aufweist. Derartige Zentrierkegelwinkel bieten eine hohe Stabilität und eine gute Zentrierwirkung.

Vorstehend wurde angedeutet, dass herkömmliche Vorrichtungen insbesondere im Hinblick auf die Variabilität beim Einspannen eines Werkstücks zwischen zwei Spitzen stark eingeschränkt sind. Um die Einspannung von Werkstücken verschiedener Länge realisieren zu können, sieht eine Weiterbildung der Erfindung vor, dass der Gegenhalter In axialer Richtung verlagerbar und fixierbar ist. Die Erfindung sieht zur Adaptierung an verschiedenartige Werkstücke, welche nicht unmittelbar mit einer entsprechenden Ausnehmung zum Eingreifen des Mitnehmers ausgebildet sind, ein Adapterelement vor, welches zur Fixierung an dem Werkstück ausgebildet ist und welches mit dem Spanndorn zum Einspannen des Werkstücks zusammenwirkt. Bei der Verwendung eines derartigen Adapterelements wird zunächst das Werkstück in diesem fixiert und später dann zusammen mit dem Adapterelement auf den Spanndorn aufgesetzt. Dabei kann das Adapterelement so ausgebildet sein, dass es lediglich zur Drehmomentübertragung von dem Spanndorn auf das Werkstück dient, beispielsweise über eine entsprechende Ausnehmung, in welche das Eingriffselement eingreift. Ein Zentrieren des einzuspannenden Werkstücks erfolgt jedoch immer noch über den Spanndorn und den Gegenhalter, da das Adapterelement derart ausgebildet ist, dass es nicht unmittelbar mit dem Spanndorn zentrierend zusammen wirkt. Der Spanndorn greift vielmehr in eine entsprechende Zentrierausnehmung des in dem Adapterelement aufgenommenen Werkstücks ein.

Zur Drehmomentübertragung von dem Spanndorn auf das Adapterelement kann in einer Weiterbildung der Erfindung vorgesehen sein, dass das Adapterelement eine Eingriffsnut aufweist, die mit dem Eingriffselement oder dem Eingriffskörper in Drehmoment übertragenden Eingriff bringbar ist. Die Eingriffsnut kann sich in axialer Richtung über eine bestimmte Länge erstrecken, so dass das Eingriffselement oder der Eingriffskörper in entsprechender Weise in verschiedenen Positionen innerhalb dieser Eingriffsnut eingreifen kann. Dadurch ist eine axiale Verschiebung und Positionierung des Adapterelements bezüglich des Spanndorns möglich, so dass auch eine höhere Variabilität beim Einspannen von Werkstücken bezüglich deren axialer Positionierung gegeben ist.

Eine Weiterbildung der Erfindung sieht vor, dass das Adapterelement an seinem Außenumfang mit einer Greiferrille ausgebildet ist, in welche ein externer Greifer zum Transport des Adapterelements eingreifen kann. Mittels der Greiferrille kann das Adapterelement und ein darin vorab eingespanntes Werkstück leichter gehandhabt werden. Dies dient insbesondere der automatischen Bestückung der erfindungsgemäßen Vorrichtung mit Werkstücken, die bereits mit Adapterelementen versehen wurden.

Die Erfindung wird im Folgenden anhand der beiliegenden Figuren beispielhaft erläutert. Es stellen dar:
- Fig.1: einen schematischen Längstellschnitt einer erfindungsgemäßen Vorrichtung mit darauf eingespanntem Werkstück,
- Fig.2: den Querschnitt II-II aus Fig.1;
- Fg.3: eine vergrößerte Darstellung des in Fig.2 mit III bezeichneten Bildausschnitts;
- Fig.4: eine vergrößerte Darstellung des in Fig.1 mit IV bezeichneten Bildausschnitts;
- Fig.5: eine Darstellung entsprechend Fig.1 während dem Positionieren eines mit einem Adapterelement versehenen Werkstücks auf einem Spanndorn;
- Fig.6: eine Ansicht entsprechend Fig.1 In einer von dieser abweichenden Einspannsituation;
- Fig.7: eine Ansicht entsprechend Fig.1 und 6 einer weiteren Einspannsituabon;
- Fig.8: eine Ansicht entsprechend Fig.1, 6 und 7 einer weiteren Einspannsituation;
- Fig.9: eine zweite Ausführungsform der erfindungsgemäßen Vorrichtung In einem Längsschnitt und
- Fig.10: eine Ansicht der Vorrichtung aus Fig.9, jedoch um 90° um die Längsachse gedreht.

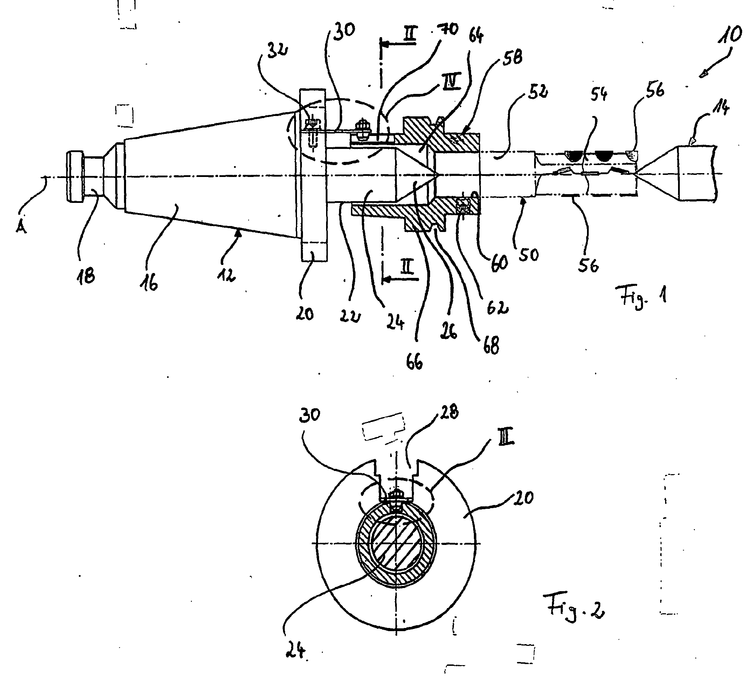

In Fig.1 ist eine erfindungsgemäße Vorrichtung allgemein mit 10 bezeichnet. Diese umfasst einen um eine Längsachse A drehantreibbaren Spanndorn 12 und einen diesem gegenüberliegenden Gegenhalter 14.

Der Spanndorn 12 ist mit einem kegelförmigen Koppelschaft 16 und einem sich an diesen anschließenden Anzugbolzen 18 ausgebildet, die zum Einspannen des Spanndorns 12 in einer Bearbeitungsmaschine in an sich herkömmlicher Weise dienen. An den durchmessergroßen Teil des Koppelschafts 12 schließt sich ein Radialflansch 20 an. Von diesem ausgehend erstreckt sich in Richtung der Längsachse A ein Dorn 22 mit einem kreiszylindrischen Abschnitt 24 und einer Kegelspitze 26.

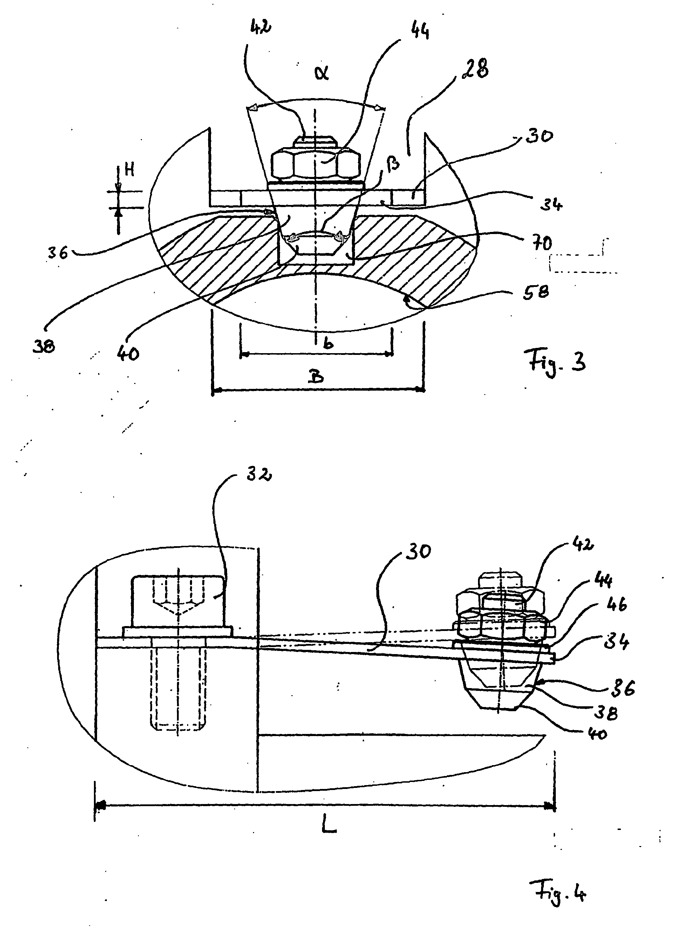

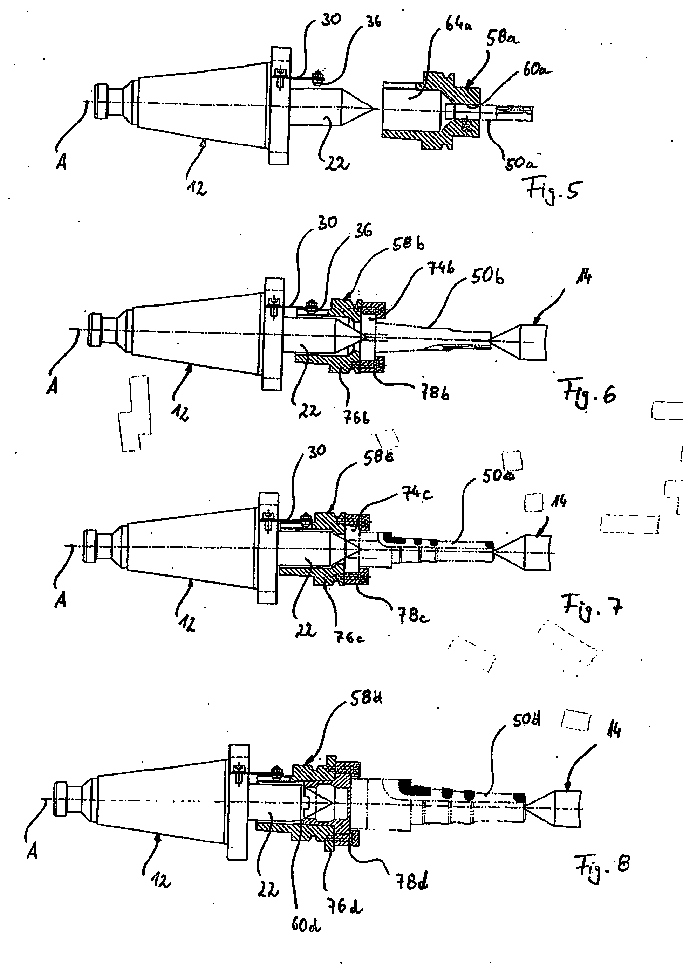

In den Radialflansch 20 des Spanndorns 12 ist eine in Fig.2 und 3 näher gezeigte radiale Ausnehmung 28 eingearbeitet. In diese ist eine Blattfeder 30 eingelegt, welche sich ausgehend von der radialen Ausnehmung 28, wie in Fig.1 und 4 gezeigt, in axialer Richtung nach rechts erstreckt. Die Blattfeder 30 ist an ihrem in der Ausnehmung 28 liegenden Ende mit einer Kopfschraube 32 an dem Spanndorn 12 fest fixiert. Sie weist im Bereich der Ausnehmung 28 eine Breite B auf, die im Wesentlichen mit der Breite der Ausnehmung 28 übereinstimmt, so dass sie formschlüssig in dieser Ausnehmung anliegt. In dem aus der Ausnehmung 28 überstehenden Teil der Blattfeder 30 verjüngt sich diese bezüglich ihrer Breite und erreicht schließlich an ihrem freien Ende 34 eine Breite b die die Breite B im Bereich der Ausnehmung 28 unterschreitet. Die Blattfeder 30 besitzt eine Höhe H, welche über deren gesamte Länge L konstant ist. Nahe dem freien Ende 34 ist an der Blattfeder 30 ein Eingriffselement 36 angebracht. Dieses weist Kegelstumpfabschnitte auf, nämlich den Kegelstumpfabschnitt 38 und den sich daran anschließenden Kegelstumpfabschnitt 40. Der Kegelstumpfabschnitt 38 besitzt einen Kegelwinkel α von etwa 30°, der Kegelstumpfabschnitt 40 besitzt einen Kegelwinkel β von etwa 80°.

An dem Eingriffselement 36 ist ein Gewindeschaft 42 ausgebildet, auf welchen eine Mutter 44 aufgeschraubt ist. Die Mutter 44 verspannt unter Vermittlung einer Unterlegscheibe 46 das Eingriffselement 36 mit der Blattfeder 30. Wie Fig.4 zu entnehmen ist, kann das freie Ende 34 der Blattfeder 30 zusammen mit dem Eingriffselement 36 in radialer Richtung federnd ausgelenkt werden.

Fig.1 zeigt ferner ein Werkstück 50 mit einem Werkstückschaft 52 und einem bearbeitungsaktiven Bereich 54, an welchem Schneiden 56 angebracht sind. Das Werkstück 50 ist zwischen dem Dorn 22 und dem Gegenhalter 14 auf der Längsachse A und um diese drehbar eingespannt.

In Fig.1 erkennt man weiter, dass der Werkstückschaft 52 in einem Adapterelement 58 aufgenommen ist. Das Adapterelement 58 ist hohl ausgebildet und weist eine erste Aufnahmeöffnung 60 auf, die auf den Außendurchmesser des Werkstückschafts 52 abgestimmt ist. In diesem Bereich ist in das Adapterelement eine Madenschraube 62 eingeschraubt zur Fixierung des Werkstücks 50 innerhalb der Aufnahmeöffnung 60. Das Adapterelement 58 weist einen sich an die Aufnahmeöffnung 60 anschließenden durchmesservergrößerten Aufnahmebereich 64 auf, in welchen der Dorn 22 mit radialem Spiel hineinragt. Dadurch kann das Werkstück 50 zwischen den beiden Spitzen des Doms 22 und des Gegenhalters 14 in an sich herkömmlicher Weise eingespannt werden, ohne dass das Adapterelement 58 Zentriereigenschaften übernimmt.

An seiner Außenoberfläche weist das Adapterelement 58 einen ringförmigen Ansatz 66 auf, in welchem eine Greiferrille 68 in Umfangsrichtung ausgebildet ist. Diese dient zur einfachen Handhabung des Adapterelements 58 und des darin eingespannten Werkstücks 50. Ferner weist das Adapterelement 58 an seinem Außenumfang eine Eingriffsnut 70 auf. Die Eingriffsnut 70 besitzt, wie in Fig.3 dargestellt, einen im Wesentlichen rechteckförmigen Querschnitt und erstreckt sich ausgehend von dem in Fig.1 gezeigten linken Ende des Adapterelements 58 über etwa ein Drittel dessen Länge. In die Eingriffsnut 70 greift das Eingriffselement 36 ein und wird durch die Blattfeder 30 wie in Fig.3 gezeigt in Anlage mit den Flanken der Eingriffsnut 70 gehalten. Dies bedeutet, dass aufgrund der Federwirkung der Blattfeder 30 das Eingriffselement 36 stets in spielfreier Anlage mit den Flanken der Eingriffsnut 70 gehalten wird. Über den Eingriff des Eingriffselements 36 in die Eingriffsnut 70 kann eine Drehmomentübertragung ausgehend von dem Spanndorn 12 über die Blattfeder 30 zu dem Adapterelement 58 und von diesen auf das Werkstück 50 erfolgen.

In Fig.1 erkennt man, dass sich die Axialposition des Adapterelements 58 bezüglich des Spanndorns 12 durch die Position des Werkstücks 50 bestimmt, in welcher dieses in dem Adapterelement 58 aufgenommen und über die Madenschraube 62 fixiert ist. Daraus kann einfach abgeleitet werden, dass durch ein andersartiges Einspannen des Werkstücks 50 innerhalb des Adaptereiemenfis 58 das Adapterelement 58 auch eine gegenüber Fig.1 veränderte Axialposition bezüglich des Spanndorns 12 einnehmen kann. Dennoch kann eine Drehmomentübertragung erfolgen, denn das Eingriffselement 36 kann über die gesamte Länge der Eingriffsnut 70 in diese eingreifen und Drehmoment von dem Spanndorn 12 über die Blattfeder 30 auf das Adapterelement 58 übertragen.

In Fig.5 bis 8 sind nun weitere Einspannsituationen dargestellt, die im Folgenden beschrieben werden sollen.

Fig.5 zeigt eine Situation während des Einspannens eines von dem Werkstück 50 gemäß Fig.1 in seinen Außenabmessungen abweichenden Werkstücks 50a auf dem Spanndorn 12. Hierzu wird ein Adapterelement 58 verwendet, welches in seinem den Spanndorn 22 aufnehmenden Aufnahmebereich 64a im Wesentlichen gleich dem Adapterelement 58 aus Fig.1 ausgebildet ist, jedoch im Bereich der Aufnahmeöffnung 60a auf die Außenabmessungen des Werkstücks 50a abgestimmt ist. Fig.5 zeigt aus Gründen der zeichnerischen Vereinfachung den Gegenhalter 14 nicht

Fig.6 zeigt eine Einspannsituation ähnlich der in Fig.1, wobei ein Werkstück 50b zwischen dem Spanndorn 22 und dem Gegenhalter 14 eingespannt ist, welches an seinem dem Spanndorn 22 zugewandten Ende einen Flansch 74b aufweist. Zur Fixierung des Flansches 74b und damit des gesamten Werkstücks 50b in dem Adapterelement 58b ist dieses zweiteilig ausgebildet. Es umfasst einen ersten Adapterteil 76b und einen zweiten Adapterteil 78b. Der erste Adapterteil 76b dient zur Aufnahme des Spanndorns 22 und des Eingriffselements 36 und ist daher ähnlich dem Adapterelement 58 aus Fig.1 in seinem dem Spanndorn 22 nahen Bereich ausgebildet. Der Adapterteil 78b ist deckelförmig ausgebildet und weise eine zentrale Öffnung auf, durch die sich das Werkstück 50b in axialer Richtung hindurch erstrecken kann. Der Adapterteil 78b umgreift den Flansch 74b und ist an dem Adapterteil 76b mit Kopfschrauben festgeschraubt und mit diesem verspannt. Dadurch sitzt der Flansch 74b und mit diesem das Werkstück 50b fest in dem zweiteiligen Adapterelement 58b. Es kann zwischen dem Spanndorn 22 und dem Gegenhalter 14 auf der Achse A zentriert werden und unter Drehmomentübertragung vermittels der Blattfeder 30 und des Eingriffselements 36 über den Spanndorn 12 drehangetrieben werden.

Fg.7 zeigt eine ähnliche Einspannsituation wie in Fig.6 gezeigt. Wiederum wird ein zweiteiliges Adapterelement 58c verwendet, welches nach einem gegenseitigen Verspannen der Adapterteile 76c und 78c den Flansch 74c eines Werkstücks 50c fest in sich aufnimmt. Das Werkstück 50c weist allerdings eine im Gegensatz zu dem Werkstück 50b durchmesservergrößerte Innenbohrung auf, in welche der Dorn 22 mit seiner Kegelspitze 26 eintaucht. Aufgrund des größeren Durchmessers der Innenbohrung muss der Dorn zur Zentrierung des Werkstücks 50c axial weiter in dieses eintauchen. Dadurch kommt es zu einer gegenüber der Darstellung aus Fig.6 abweichenden Axialposi4on des Adapterelements 58c bezüglich des Spanndorns 12.

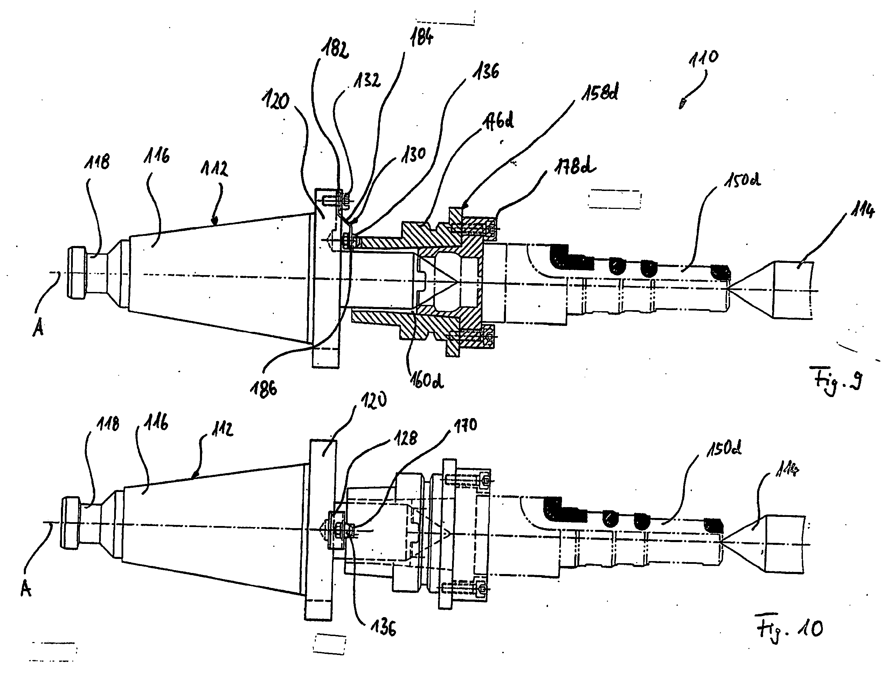

Bei Vergleich der Darstellungen aus Fig.6 und Fig.7 kann man erkennen, dass durch die erfindungsgemäße Vorrichtung eine variable und vielfältige Einspannung verschiedener Werkstücke möglich ist.

Fig.8 zeigt eine weitere Einspannsituation. Wiederum wird ein zweiteiliges Adapterelement 58d zur Einspannung des Werkstücks 50d verwendet, wobei der Adapterteil 78d über Kopfschrauben mit dem Adapterteil 76d verspannt ist. Dabei wird ein kegelförmiger Endbereich des Werkstücks 50d in einer entsprechenden kegelförmig ausgebildeten Aufnahmeöffnung 60d des Adapterelements 58d aufgenommen.

Ausgehend von der Einspannsituation gemäß Fig.8 soll nun mit Bezug auf Fig.9 und 10 ein zweites Ausführungsbeispiel der vorliegenden Erfindung beschrieben werden. Zur Vermeidung von Wiederholungen und zur Vereinfachung der Beschreibung sollen für gleichartige oder gleichwirkende Komponenten dieselben Bezugszeichen verwendet werden, wie für die Beschreibung der Fig.1 bis 8, jedoch mit der Ziffer "1" vorangestellt.

Die Ausführungsform gemäß Fig.9 und 10 unterscheidet sich von der ersten Ausführungsform gemäß Fig.1 bis 8 darin, dass die Blattfeder 130 derart ausgebildet ist, dass sie in axialer Richtung in eine korrespondierende sich in axialer Richtung öffnende Eingriffsnut 170 eingreift und somit für eine Drehmomentübertragung sorgt.

Hierzu ist die Blattfeder 130 stufig ausgebildet. Sie ist mit einem ersten Abschnitt 182 an dem Radialflansch 120 in einer sich in axialer Richtung öffnenden Ausnehmung über die Kopfschraube 132 befestigt. Die Ausnehmung 128 ist wieder entsprechend der Blattfeder 130 dimensioniert, so dass die Blattfeder 130 formschlüssig in der Ausnehmung 128 anliegt. Die Blattfeder 130 erstreckt sich dann ausgehend von dem Abschnitt 132 über einen in Fig.9 schräg nach unten verlaufenden Abschnitt 184 zu einem in Fig.9 im Wesentlichen orthogonal zur Längsachse A verlaufenden Abschnitt 186, der in axialer Richtung federnd auslenkbar ist.

An dem Abschnitt 186 ist das Eingriffselement 136 angebracht, und zwar im Wesentlichen in gleicher Art und Weise, wie mit Bezug auf Fig.1 bis 4 beschrieben. Das Eingriffselement 136 greift in die korrespondierende axiale Eingriffsnut 170 an dem Adapterelement 158d ein.

Eine Drehmomentübertragung von dem Spanndorn 112 erfolgt wiederum unter Vermittlung der Blattfeder 130 und dem in die korrespondierende Eingriffsnut 170 eingreifenden Eingriffselement 136 auf das Werkstück 150d, so dass dieses um die Achse A drehangetrieben werden kann.

Vorstehend wurde erläutert, dass mittels der erfindungsgemäßen Vorrichtung eine vielfältige und variable Einspannmöglichkeit von Werkstücken zwischen einem Spanndorn und einem Gegenhalter, insbesondere zwischen zwei Spitzen, zur Verfügung gestellt wird.

## Patentansprüche

1. Vorrichtung (10; 110) zum Einspannen eines Werkstücks (50, 50a, 50b, 50c, 50d; 150d) auf einer drehantreibbaren Längsachse mit:
- einem Spanndorn (12; 112)
- einem Gegenhalter (14; 114) und
- einem Mitnehmer,
wobei zumindest der Spanndorn (12; 112) um die Längsachse (A) drehbar gelagert ist und
wobei der Mitnehmer an dem Spanndorn (12; 112) fixiert und beim Einspannen des Werkstücks (50, 50a, 50b, 50c, 50d; 150d) zwischen dem Spanndorn (12; 112) und dem Gegenhalter (14; 114) mit dem Werkstück (50, 50a, 50b, 50c, 50d; 150d) derart in Eingriff bringbar ist, dass er eine Drehbewegung des Spanndorns (12; 112) auf das Werkstück (50, 50a, 50b, 50c, 50d; 150d) überträgt,
wobei der Mitnehmer ein Federelement (30; 130) aufweist,
**gekennzeichnet durch** ein Adapterelement (58; 158), welches zur Fixierung an dem Werkstück (50, 50a, 50b, 50c, 50d; 150d) ausgebildet ist und welches mit dem Spanndorn (12; 112) zum Einspannen des Werkstücks (50, 50a, 50b, 50c, 50d; 150d) zusammenwirkt, wobei das Federelement (30; 130) unter Vorspannung an dem Adapterelement (58; 158) zur Drehmomentübertragung angreift oder in Eingriff mit diesem bringbar ist.

2. Vorrichtung (10; 110) nach Anspruch 1,
**dadurch gekennzeichnet, dass** das Federelement eine Blattfeder (30; 130) umfasst, die einenends an dem Spanndorn (12; 112) fixiert ist und an ihrem freien Ende mit einem Eingriffselement (36; 136) ausgebildet ist, wobei das Eingriffselement (36; 136) auslenkbar und mit dem Werkstück (50, 50a, 50b, 50c, 50d; 150d) in verdrehsicheren Eingriff bringbar Ist.

3. Vorrichtung (10; 110) nach Anspruch 2,
**dadurch gekennzeichnet, dass** die Blattfeder (30; 130) in einer radialen oder axialen Ausnehmung (28; 128) des Spanndorns (12; 112) formschlüssig aufgenommen und fixiert ist.

4. Vorrichtung (10; 110) nach Anspruch 2 oder 3,
**dadurch gekennzeichnet, dass** die Blattfeder (30; 130) eine Breite (B, b) aufweist, die ein Mehrfaches der Höhe (H) beträgt.

5. Vorrichtung (10) nach einem der Ansprüche 2 bis 4,
**dadurch gekennzeichnet; dass** sich die Blattfeder (30) in axialer Richtung verjüngt.

6. Vorrichtung (10) nach eine der Ansprüche 2 bis 5,
**dadurch gekennzeichnet, dass** sich das Eingriffselement (36) verengt.

7. Vorrichtung (10; 110) nach Anspruch 6,
**dadurch gekennzeichnet, dass** das Eingriffselement (36; 136) in Form eines mehrstufigen Kegels (38; 40) ausgebildet ist, wobei die Kegelwinkel (α, β) mitzunehmendem Abstand von dem freien Ende der Blattfeder (30; 130) zunehmen.

8. Vorrichtung nach Anspruch 1,
**dadurch gekennzeichnet, dass** das Federelement eine Druckfeder umfasst, weiche an ihrem freien Ende mit einem Eingriffskörper ausgebildet ist.

9. Vorrichtung nach Anspruch 8,
**dadurch gekennzeichnet, dass** die Druckfeder und der Eingriffskörper zumindest teilweise in einer Aufnahmebohrung des Spanndorns oder des Gegenhalters aufgenommen und in dieser unter Komprimierung der Druckfeder verlagerbar sind.

10. Vorrichtung (110) nach einem der vorangehenden Ansprüche,
**dadurch gekennzeichnet, dass** das Federelement (130) in axialer Richtung auslenkbar ist.

11. Vorrichtung (10) nach einem der Ansprüche 1 bis 9,
**dadurch gekennzeichnet, dass** das Federelement (30) in radialer Richtung auslenkbar ist.

12. Vorrichtung (10; 110) nach einem der vorhergehenden Ansprüche,
**dadurch gekennzeichnet, dass** der Spanndorn (12; 112) oder/und der Gegenhalter (14; 114) je einen Zentrierkegel aufweisen.

13. Vorrichtung (10; 110) nach Anspruch 12,
**dadurch gekennzeichnet, dass** der Zentrierkegel einen Zentrierkegelwinkel im Bereich zwischen 45° und 75°, bevorzugt zwischen 55° und 65°, besonders bevorzugt bei 60° aufweist.

14. Vorrichtung (10; 110) nach einem der vorhergehenden Ansprüche,
**dadurch gekennzeichnet, dass** der Gegenhalter (14; 114) in axialer Richtung verlagerbar und fixierbar sind.

15. Vorrichtung (10; 110) nach einem der vorangehenden Ansprüche ,
**dadurch gekennzeichnet, dass** das Adapterelement (58; 158) eine Eingriffsnut (70; 170) aufweist, die mit dem Eingriffselement (36; 136) oder dem Eingriffskörper in Drehmoment übertragenden Eingriff bringbar ist.

16. Vorrichtung nach einem der vorangehenden Ansprüche,
**dadurch gekennzeichnet, dass** das Adapterelement (58; 158) an seinem Außenumfang mit einer Greiferrille (68; 168) ausgebildet ist, in welche ein externer Greifer zum Transport des Adapterelements (58; 158) eingreifen kann.

## Claims

1. A device (10; 110) for clamping a workpiece (50, 50a, 50b, 50c 50d; 150d) on a rotatably drivable longitudinal axis, comprising:
- a tensioning spindle (12; 112)
- a counter-holder (14; 114) and
- a carrier,
at least the tensioning spindle (12; 112) being mounted so as to be rotatable about the longitudinal axis (A), and
the carrier being fixed to the tensioning spindle (12; 112) and, when the workpiece (50, 50a, 50b, 50c, 50d; 150d) is clamped between the tensioning spindle (12; 112) and the counter-holder (14; 114), being capable of being brought into engagement with the workpiece (50, 50a, 50b, 50c, 50d; 150d) in such a way that it transmits a rotary movement of the tensioning spindle (12; 112) to the workpiece (50, 50a, 50b, 50c, 50d; 150d),
the carrier having a spring element (30; 130),
**characterised by** an adapter element (58; 158) which is constructed to be fixed to the workpiece (50, 50a, 50b, 50c, 50d; 150d) and which cooperates with the tensioning spindle (12; 112) for clamping the workpiece (50, 50a, 50b, 50c, 50d; 150d), the spring element (30; 130) acting on the adapter element (58; 158) under prestress to transmit a torque or being adapted of being brought into engagement with said adapter element.

2. The device (10; 110) according to Claim 1,
**characterised in that** the spring element comprises a leaf spring (30; 130) which, at one end, is fixed to the tensioning spindle (12; 112) and, at its free end, is provided with an engagement element (36; 136), the engagement element (36; 136) being capable of deflection and of being brought into torsion-resistant engagement with the workpiece (50, 50a, 50b, 50c, 50d; 150d).

3. The device (10; 110) according to Claim 2,
**characterised in that** the leaf spring (30; 130) is received and fixed with form fit in a radial or axial cutout (28; 128) in the tensioning spindle (12; 112).

4. The device (10; 110) according to Claim 2 or 3,
**characterised in that** the leaf spring (30; 130) has a width (B, b) which is a multiple of the height (H).

5. The device (10) according to one of Claims 2 to 4,
**characterised in that** the leaf spring (30) tapers in the axial direction.

6. The device (10) according to one of Claims 2 to 5,
**characterised in that** the engagement element (36) tapers.

7. The device (10; 110) according to Claim 6,
**characterised in that** the engagement element (36; 136) is configured as a multistepped cone (38; 40), the cone angles (α, β) increasing with increasing distance from the free end of the leaf spring (30; 130).

8. The device according to Claim 1,
**characterised in that** the spring element comprises a pressure spring which is provided with an engagement body at its free end.

9. The device according to Claim 8,
**characterised in that** the pressure spring and the engagement body are at least partially received in a receiving bore in the tensioning spindle or the counter-holder and are displaceable in said receiving bore with compression of the pressure spring.

10. The device (110) according to one of the preceding claims,
**characterised in that** the spring element (130) can be deflected in the axial direction.

11. The device (10) according to one of Claims 1 to 9,
**characterised in that** the spring element (30) can be deflected in the radial direction.

12. The device (10; 110) according to one of the preceding claims,
**characterised in that** the tensioning spindle (12; 112) and/or the counter-holder (14; 114) each have a centring cone.

13. The device (10; 110) according to Claim 12,
**characterised in that** the centring cone has a centring cone angle in the range between 45° and 75°, preferably between 55° and 65°, particularly preferably of 60°.

14. The device (10; 110) according to one of the preceding claims,
**characterised in that** the counter-holder (14; 114) can be displaced and fixed in the axial direction.

15. The device (10; 110) according to one of the preceding claims,
**characterised in that** the adapter element (58; 158) has an engagement groove (70; 170) which can be brought into torque-transmitting engagement with the engagement element (36; 136) or the engagement body.

16. The device according to one of the preceding claims,
**characterised in that**, at its outer circumference, the adapter element (58; 158) is provided with a gripper channel (68; 168) into which an external gripper may engage to transport the adapter element (58; 158).

## Revendications

1. Dispositif (10 ; 110) de serrage d'une pièce (50, 50a, 50b, 50c, 50d ; 150d) sur un axe longitudinal entraînable en rotation comprenant :
- un mandrin (12 ; 112)
- un contre-appui (14 ; 114) et
- un entraîneur,
au moins le mandrin (12 ; 112) étant monté rotatif autour de l'axe longitudinal (A) et l'entraîneur étant fixé sur le mandrin (12 ; 112) et pouvant, lors du serrage de la pièce (50, 50a, 50b, 50c, 50d ; 150d) entre le mandrin (12 ; 112) et le contre-appui (14 ; 114), être amené en prise avec la pièce (50, 50a, 50b, 50c, 50d ; 150d) de telle manière qu'il transmet un mouvement de rotation du mandrin (12 ; 112) à la pièce (50, 50a, 50b, 50c, 50d ; 150d),
l'entraîneur présentant un élément élastique (30 ; 130),
**caractérisé par** un élément adaptateur (58 ; 158) lequel est conçu pour être fixé sur la pièce (50, 50a, 50b, 50c, 50d ; 150d) et coopère avec le mandrin (12 ; 112) pour le serrage de la pièce (50, 50a, 50b, 50c, 50d ; 150d), l'élément élastique (30 ; 130) agissant, sous précontrainte, sur l'élément adaptateur (58; 158) ou pouvant être amené en prise avec celui-ci pour la transmission du couple de rotation.

2. Dispositif (10 ; 110) selon la revendication 1,
**caractérisé en ce que** l'élément élastique comprend un ressort à lame (30 ; 130) fixé par une de ses extrémités au mandrin (12 ; 112) et muni à son extrémité libre d'un élément de prise (36 ; 136), ledit élément de prise (36 ; 136) étant déviable et pouvant être amené en prise, sans possibilité de rotation, avec la pièce (50, 50a, 50b, 50c, 50d ; 150d).

3. Dispositif (10; 110) selon la revendication 2,
**caractérisé en ce que** le ressort à lame (30 ; 130) est logé et fixé par complémentarité de forme dans un évidement (28 ; 128) radial ou axial du mandrin (12; 112).

4. Dispositif (10; 110) selon la revendication 2 ou 3,
**caractérisé en ce que** le ressort à lame (30 ; 130) présente une largeur (B, b) qui s'élève à un multiple de la hauteur (H).

5. Dispositif (10) selon l'une des revendications 2 à 4,
**caractérisé en ce que** le ressort à lame (30) va en diminuant dans la direction axiale.

6. Dispositif (10) selon l'une des revendications 2 à 5,
**caractérisé en ce que** l'élément de prise (36) va en diminuant.

7. Dispositif (10; 110) selon la revendication 6,
**caractérisé en ce que** l'élément de prise (36 ; 136) se présente sous la forme d'un cône (38 ; 40) à plusieurs paliers, les angles de cône (α, β) augmentant à mesure qu'ils s'éloignent de l'extrémité libre du ressort à lame (30 ; 130).

8. Dispositif selon la revendication 1,
**caractérisé en ce que** l'élément élastique comprend un ressort de compression, lequel est muni à son extrémité libre d'un corps de prise.

9. Dispositif selon la revendication 8,
**caractérisé en ce que** le ressort de compression et le corps de prise sont logés pour le moins en partie dans un alésage du mandrin ou du contre-appui et peuvent être déplacés dans ledit alésage sous compression du ressort de compression.

10. Dispositif (110) selon l'une des revendications précédentes,
**caractérisé en ce que** l'élément élastique (130) est déviable dans la direction axiale.

11. Dispositif (10) selon l'une des revendications 1 à 9,
**caractérisé en ce que** l'élément élastique (30) est déviable dans la direction radiale.

12. Dispositif (10 ; 110) selon l'une des revendications précédentes,
**caractérisé en ce que** le mandrin (12 ; 112) et/ou le contre-appui (14 ; 114) présentent chacun un cône de centrage.

13. Dispositif (10 ; 110) selon la revendication 12,
**caractérisé en ce que** le cône de centrage présente un angle de cône de centrage situé dans l'intervalle compris entre 45° et 75°, de préférence entre 55° et 65°, plus particulièrement préféré de 60°.

14. Dispositif (10; 110) selon l'une des revendications précédentes,
**caractérisé en ce que** le contre-appui (14; 114) peut être déplacé et fixé dans la direction axiale.

15. Dispositif (10 ; 110) selon l'une des revendications précédentes,
**caractérisé en ce que** l'élément adaptateur (58 ; 158) présente une gorge de prise (70 ; 170) qui peut être amenée en prise avec l'élément de prise (36 ; 136) ou le corps de prise pour la transmission du couple de rotation.

16. Dispositif selon l'une des revendications précédentes,
**caractérisé en ce que** l'élément adaptateur (58 ; 158) est muni sur sa circonférence extérieure d'une cannelure de prise (68 ; 168) dans laquelle un preneur externe peut venir en prise pour le transport de l'élément adaptateur (58 ; 158).
